# EUROPEAN PATENT APPLICATION

(11) **EP 1 189 160 A1**
(43) Date of publication of application: **20.03.2002**
(21) Application number: 00402518.5
(22) Date of filing: 13.09.2000
(51) Int. Cl.: G06F 17/60

(54) **Method and system for transforming session data**

(71) Applicant: iMediation, S.A., 92045 Paris La Defense (FR)
(72) Inventor: Baudu, Regis Jacques, 75018 Paris (FR); Colin, Dominique Michel, 78810 Feucherolles (FR); Cores, Andres, 75016 Paris (FR); Lhospitalier, Denis Rene Marie, 75012 Paris (FR); Sair, Faraj, 92250 La Garenne Colombes (FR)
(74) Representative: Harris, Ian Richard

(57) **Abstract**

A disclosed method for transforming data from client-server request /response cycle includes receiving session-level semantic events. The session-level semantic events are mapped to accumulation containers based on a policy, for instance, based on a session identifier. The session level semantic events are examined for a type. From the type, the session level semantic events are mapped to one or more rules which perform aggregations, accumulations, or other operations based on the data from the session level semantic events. The rules perform these aggregations, accumulations, or other operations over a set of session level semantic events for generating information (termed "enterprise facts") that are independent of the client-server protocol and have an meaning in context that spans more than the request/response cycle. Enterprise facts are generated when an session level semantic event that is a triggering condition for an action is received. When the enterprise fact is generated it can draw on the aggregations, accumulations, or other operations performed by the rules in that accumulation container. Also disclosed is the use of a message broker for receiving the session level semantic events from their source and the use of message broker for distributing the enterprise facts.

## Description

### FIELD

Features of the invention related generally to management of browsing session data and more particularly to systems and techniques for the flexible and efficient transformation of session data into an enterprise context.

### BACKGROUND

Recent years have seen a trend toward sectors of our economy and society implementing their operations electronically. Electronic commerce has flourished and continues to grow in importance. More generally "virtual" enterprises have also seen rapid growth. Implementing electronic commerce and virtual enterprises has created a need for rapidly-deployable comprehensive solutions for managing partnerships among entities collaborating across computer networks. Features in the co-pending patent application noted above are an example, although the present invention is not limited to cooperation with that system.

Commonly, a user of the services of an electronic enterprise interacts with the enterprise through some client system, e.g. a web browser, mobile phone, set-top box, etc.. On the other (server) side of the interaction are the enterprises' computing systems. These systems generate data as part of the interaction. This data is driven by the client-server request/response cycle and reflects a low-level aspect of the interaction. More particularly, data from request/response events directly has the limited context of the client-server data flow. Accordingly, for any semantic which spans many request/response cycles, events generated from one request/response cycle represent information in that semantic.

When the electronic enterprise―or a partner of the electronic enterprise―seeks to use information gained in connection with services provided through client-server communication with the user, a fundamental information context problem arises. At the simplest level, event data gained from client-server requests or responses is generally protocol-dependant. More fundamentally, data taken from the client-server data flow is limited to the context or semantic of the client-server data flow. The enterprise, by contrast, typically desires that facts be generated in other contexts or semantics for use in the enterprise's operations. That is, the enterprise desires protocol-independent facts that are meaningful in the context of the enterprise's operations.

For example, a business may desire receiving the fact that a new customer directed to the business from a particular business partner just bought four items. In this example the fact has meaning in the context of, e.g., business partnership arrangements, customers, and purchases. It could be derived from, e.g., an individual navigating with his or her web browser to an on-line item catalog, selecting links or taking other actions for making purchases, and then ending the shopping session, say by a conventional checkout function. To further elaborate the point, data obtained from each HTTP client-server request/response cycle in this browsing session would be dependant on the HTTP protocol; further, its direct contextual meaning would be similarly dependant on the context of this request/response cycle. Fundamentally, if events are to be generated from client requests or server responses, then any semantic that spans more than one request/response cannot be expressed as such an event. In order, to generate facts meaningful to the business, aggregations, transformations, or other operations need to be performed based on events obtained from several HTTP request/response cycles. Referring still to the example above, facts in the context of the business' arrangement with its business partner, or in the context of the particular customer need to be gleaned, from a set of HTTP request/response cycles, each of which individually has the limited context or semantic of that cycle.

Returning from the example, there is a need for a method and system to transform event data generated in connection with client-server request/response into facts meaningful in contexts used by the enterprise. Still further, commonly the enterprise itself may be distributed and/or have partners that are distributed. In order for facts in enterprise contexts to be beneficially used, there is a further need for such a method and system to be conveniently implemented in a distributed manner. Further, there is a need for such a method and system to scale well. When the volume of client-server traffic is high, processing event data for the generation of enterprise facts could degrade performance of the client-server data flow. It is further desirable that generation of enterprise facts could be carried on asynchronously from the client-server data flow to further isolate the processing underlying the generation of enterprise facts from the client-server data flow. Such a feature could not only improve scalability, but also distributed implementation.

One conventional solution is to write session event data to some persistent storage such as a database. This solution has deficiencies. Most notably this solution scales poorly. Also, this solution implies storage of much data that is not of direct interest to the enterprise and further additional processing on this data to correlate this data in a valuable manner. On the one hand, writing the session-level semantic data to a single shared database introduces unacceptable database latency into the overall operation of the system. This is only exacerbated if the enterprises' systems are distributed. Further, the sheer volume of session-level semantic data makes the database solution expensive and unwieldy. On the other hand, if preprocessing is done and enterprise facts written to the database these deficiencies are not eliminated. When many entities need to access the shared data―particularly when only a small portion may be relevant to the particular accessing entity―this shared database again becomes a bottleneck. The database itself could be replicated and propagated, however this would introduce needless cost and latency as well. Thus there is an need for a scalable means for transforming session-level semantic event data into enterprise facts, and still further, a need for such means to be able to efficiently distribute enterprise facts to participating entities in an enterprise.

Another deficiency with conventional solutions is their lack of modularity and commensurate difficulty in optimization. One conventional approach to obtaining enterprise facts from such systems is to incorporate the logic necessary to generate this into the computing systems implementing client-server communications. However, this logic can be relatively computation and memory intensive. Thus to perform this logic in connection with real-time operation of the system can result in unacceptable performance decrease.

Still further, there are additional difficulties in attempting to rapidly distribute enterprise facts. In particular some enterprise facts can only be created based on several session-level semantic events that are greatly disparate in time which makes this attempted solution difficult to achieve without reintroducing one of the deficiencies mentioned above. Thus there is a need for distributing enterprise facts based on low-level semantic events that are disparate in time without again encountering the deficiencies in conventional solutions.

### SUMMARY

Particular and preferred aspects of the invention are set out in the accompanying independent and dependent claims. Features of the dependent claims may be combined with those of the independent claims as appropriate and in combinations other than those explicitly set out in the claims.

These and other problems are solved and benefits obtained by the present system and method transforming session data. In accordance with aspects of the invention, events generated in connection with client-server requests and/or responses including, for instance, HTTP Request and Response messages are transformed into enterprise facts. The term "session-level semantic event 'SLSE'" is used to refer to such protocol-dependent events, generated on the client-server request/response cycle, that cannot express a semantic that spans plural request/response cycles. The term "Enterprise Fact 'EF"' is used to refer to the protocol-independent data, generated upon the satisfaction of predetermined conditions, and expressing an interpretation of a set of SLSEs.

One aspect of the invention involves computer-controlled methods of generating enterprise facts from session-level semantic events. An illustrative method includes generating session-level events from data flow of a browsing session of a user. The session-level events are received and accumulated in a storage object. The storage object could be non-persistent. Then, the method determines if one of the session-level semantic events is a triggering condition of one or more rules used to generate enterprise facts. Enterprise facts are then returned for those rules for which the triggering condition is satisfied.

An additional characteristic feature of this illustrative method is where the storage object is associated with the browsing session, or the user. Yet another characteristic feature includes broadcasting enterprise facts across a message broker. Another characteristic feature involves the one or more rules having a condition portion where the condition portion has a first event portion and a second event portion. The first event portion is associated with a triggering event for the rule and the second event portion associated with other events.

Yet another characteristic feature of this illustrative method involves the one or more rules having a first action part and a second action part. The first action part includes a default action indicating an enterprise fact to return and the second action part indicating a function to be performed on second enterprise fact. In another aspect, the second action part may include a function type, a enterprise fact type to be affected; and a field of the enterprise fact to be affected. More generally, a triggered action can access and influence any event accumulated in its container.

Yet another illustrative method involves receiving events created from a user session and storing a plurality of rules, the rules having a condition part and an action part. The condition part is satisfied responsive to selected ones of the events from the user session, and the action part is for creating business event data. Next in this method, the events created from a user session are matched with the particular rules for which the events contribute to satisfaction of the condition part. The method also involves generating business event data through executing the action part of the rules upon determining the condition part of the rules is satisfied and publishing the business event data on a message broker.

Yet another aspect of the invention are computer-implemented systems for generating enterprise facts from session-level semantic events. An illustrative system includes a storage object having a method for storing a session-level semantic event, and a method for testing if the session-level semantic event is stored. The storage objects could be non-persistent. Also included is a enterprise fact generation object having a method for invoking the method testing if the session-level semantic event is stored in the storage objects to determine if a condition of a predetermined rule is satisfied. This system further includes a rule object comprising a set of conditions, a trigger condition for activating a rule; and an action for execution upon activation of the rule.

In another characteristic feature of the illustrative system the enterprise fact generation object includes a data structure for storing a value associated with a key; the key is the trigger condition, and the value is the rule.

Yet another characteristic feature includes a first message broker, where the message broker is configured for receiving enterprise facts from the enterprise fact object.

Another characteristic feature of this system involves the one or more rules having a first action part. The action part includes a default action indicating a first type of enterprise fact to return and a second action part indicating a function to be performed on second type of enterprise fact. In another aspect, the second action part may include a function type, a enterprise fact type to be affected, and a field of the enterprise fact to be affected.

Another aspect of the invention is a computer programmed to carry on functions as described above in connection with the illustrative system and methods. Programmed general purpose computers may generally provide structures for performing functions in accordance with features of the invention. An illustrative computing apparatus includes means for receiving event data from a user's session; means for accumulating the event data; means for determining if one of the session-level semantic event datum is a triggering condition of one or more rules for generating high-level semantic; and means for returning a enterprise fact for those of the one or more rules for which the triggering condition is satisfied.

### BRIEF DESCRIPTION OF THE DRAWINGS

These and other aspects, features, modes, and benefits will be better understood with reference to the accompany detailed description of illustrative embodiments and figures where:
Fig. 1 depicts a block diagram of an operating architecture for efficient generation of enterprise facts ("EF"s) from browsing session event data;
Fig. 2 depicts architectural components in Fig. 1 in greater detail;
Fig. 3 depicts a flow diagram of an illustrative operational scenario for efficient generation of EF from SLSE;
Fig. 4 depicts a block diagram of an operating architecture for efficient generation of EFs from browsing session event data in accordance with another embodiment; and
Fig. 5 depicts a flow diagram of an illustrative operational scenario for efficient generation of EF from SLSE in accordance with embodiments illustrated by Fig. 4.

### DETAILED DESCRIPTION

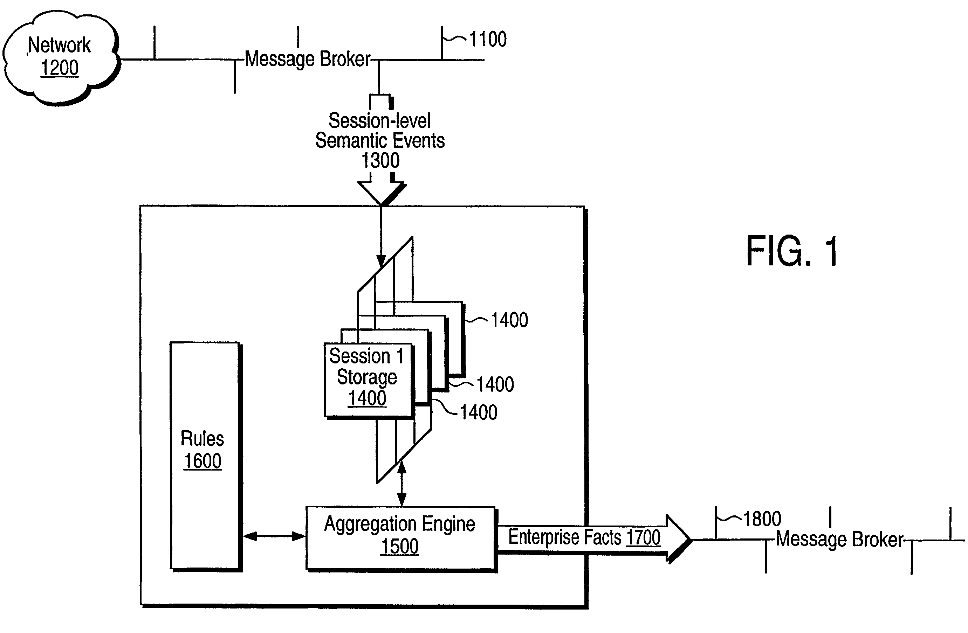

With reference to the figures, **Fig. 1** depicts a block diagram of an operating architecture for efficient generation of enterprise facts from browsing session event data in accordance with an illustrative embodiment. A first message broker **1100** provides session level semantic events **1300** (hereinafter "SLSE") from across a network **1200.** In some embodiments, the message broker **1100** uses a publish/subscribe model, in others a queue based model, and still others could be used. In some embodiments Java Messaging Services are used, while this is not fundamental, and other messaging APIs could be used. The presence of the network **1200** is not fundamental, and in some embodiments the SLSE **1300** are retrieved directly from a memory shared with the source of the SLSE **1300.**

In some embodiments the SLSE **1300** include a data structure that comprise an event identifier, an event type, and event attributes. Some events are canonical with fixed, well-known attributes. No particular representation of the SLSE **1300** is fundamental; a representation in the Extensible Markup Language ("XML") could be used as could an object representation, or other representations available to one skilled in the field. Still further, there is no fundamental limitation on the number of types of the SLSE **1300** and new types could be created.

A set of storage objects **1400** receives the SLSE **1300.** The SLSE **1300** are filtered into members of the set of storage objects **1400** based on a policy. In some embodiments, the policy is session-based, namely there is one storage object in the set of storage objects **1400** for each browsing session. New storage objects **1400** are created as necessary as the number of sessions increase and destroyed upon termination. In some embodiments, the policy for filtering events into members of set of storage objects **1400** is based on an identifier of the browser, of the user, an identifier of a partner relationship, an identifier of a compensation arrangement; an identifier of other policies could also be used. In some embodiments the identifier acts as a key in a key-value lookup data structure.

An aggregation engine **1500** requests the SLSE **1300** from the set of storage objects **1400.** Using a set of rules **1600** the aggregation engine **1500** creates enterprise facts **1700** (hereinafter "EF"). Next, a second message broker **1800** receives the EF **1700** for further distribution.

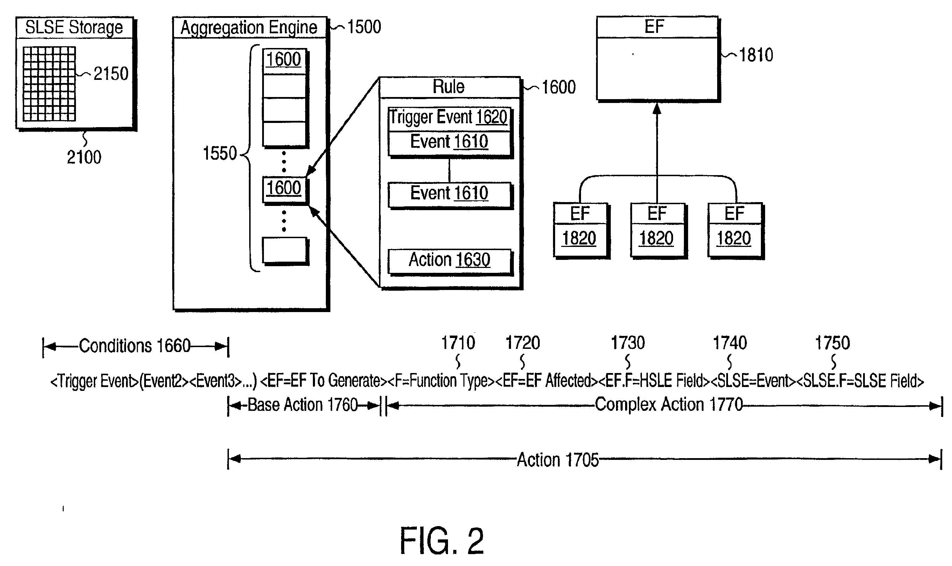

**Fig. 2** depicts architectural components in **Fig. 1** in greater detail. A storage object **2100** is an example of one of the set of storage objects **1400** in **Fig. 1** and stores SLSE. The storage object includes a data structure **2150** for storing SLSE. The data structure **2150** should be suitably chosen based on the type of filtering criteria used to allocating SLSE across plural storage objects **2100.** In some embodiments, SLSE are allocated based on a session creating the SLSE and the data structure **2150** is a hash table that maps keys to object values where the key is the type of event and object value the event. Other data structures available to one skilled in the art could be used depending on the needs of the situation.

The storage object **2100** contains several interface methods described in the following table:

**Table 1.**

| Method | Function |
|---|---|
| void init( ) | Creates an instance of the Storage Object |
| void destroy( ) | Destroys the Storage Object |
| void storeEvent( Event anEvent) | Stores an incoming event in the Storage Object |
| Boolean containsEvent(Key aKey ) | Tests if the Storage Object contains an event |
| Event retreiveEvent( Key aKey) | Retrieves an event from Storage Object |
| int removeEvent( Key aKey) | Removes an event from Storage Object |
| EventCollection getEventCollection( ) | Returns a collection of the events stored in the Storage Object |

The aggregation engine **1500** generates EFs. EFs are generated through a process of satisfaction of conditions in rules. The conditions are associated with the SLSEs; in some embodiments they are SLSE's themselves, in others they could be identifiers of SLSEs, or a transformed representation. When conditions in the rule are satisfied, an EF generated. The aggregation engine **1500** includes a rule data structure **1550** that contains a plurality of rule objects **1600.** The rule objects **1600** comprise a trigger event **1620** and, optionally, other events **1610.** The rule objects **1600** also includes and embedded action object **1630.** It is not fundamental that the action object **1630** be embedded and in some embodiments, it is not embedded although still accessible from the storage object **1400.** As described in more detail below, the aggregation engine **1500** executes the action object **1630** when the SLSE corresponding to the trigger event **1620** arrives.

Now, in greater detail, a rule **1650** includes a condition portion **1660** and an action portion **1705.** The condition portion **1660** comprises a trigger condition and zero or more additional conditions. In some embodiments the conditions are satisfied by corresponding SLSE **1300.** In some embodiments, the action portion of the rule **1650** is triggered if, and only if, the event corresponding to the trigger condition has arrived; in other embodiments the rule could be triggered if a more complex pattern of events or conditions is satisfied.

The action **1705** includes a base action **1760** and a complex action **1770.** In some embodiments, the complex action **1770** is optional. The base action **1760** includes an identifier of the EF to generate when executing the base action **1760.**

The complex action **1770** provides for the creation of EFs that reflect, or are based on, a function of SLSEs. The complex action **1770** allows for aspects of several SLSEs, perhaps distant in time, to contribute to an EF and, further, allows only the relevant aspects of the contributing SLSEs to be stored, thus freeing an implementing system from the storage burden of several SLSEs.

By way of example, consider a scenario in which a portal-type website implements a common-basket shopping model, an EF may be a Total Purchase Amount during a particular browsing session. This may be represented by a sum of the individual purchases (also an EF) for that session which is derived from SLSEs, say following a particular link (the purchase action). In this scenario, it is desired that the individual purchases EF accumulate the purchase prices throughout the session, and when the session completes (by logout, timeout, etc.) then the EF indicating total purchases for this session is produced. Other examples include, for instance, counting pages viewed, counting a number of times a given page is viewed, statistics relating to navigation paths, statistics relating to virtual "shopping carts/baskets" such as minimum/maximum items (or amount) or final state.

The complex action **1770** allows for this type of behavior (as well as much more general complex behaviors). The complex action **1770** includes a function **1710** to perform on a EF **1720,** a field **1730** in the EF **1720** to affect, a SLSE **1740** for the function **1710** to use and a field in the SLSE **1750** to take as input.

In operation, the scenario could operate by having a first rule for generating the EF of an individual purchase―the base action **1760.** The function **1710** could be an accumulator and the Total Purchase Amount EF could be the EF **1720** that is accumulated by the function **1710.** The field **1730** would be an amount field to accumulate. The SLSE **1740** and the field in the SLSE **1750** would be the appropriate field in the one of the conditions **1660** to add―namely the purchase price of the individual purchase. One of skill in the art, having the benefit of this disclosure will appreciate that this framework for the rule **1650** affords great flexibility in generating EFs. Still further, it frees an implementing system from storing the SLSEs and rather allows for the efficient storing of just the accumulated total of their contribution to the EF of total session purchase amount. As one skilled in the field will by now recognize, operation of the complex action **1770** is not limited to the above scenario. Rather, one skilled in the art, having the benefit of this disclosure will recognize other situations where this aspect could be beneficially employed.

Returning to the aggregation engine **1500,** the illustrative embodiment includes several interface methods set forth in the following table:

**Table 2.**

| Method | Function |
|---|---|
| AggregationRule(String aRule) | Constructor for a Rule from a String |
| AggregationRule( ) | Default constructor for a Rule |
| int getTrigger( ) | Returns a code of the trigger event |
| void setTrigger( ) | Sets a trigger event for the rule |
| void setCondition(String aCondition) | Set a condition for the rule |
| void setConditions(String Conditions) | Set all the conditions of the rule |
| void setAction(String anAction) | Set the action will be executed by the rule |
| Enumeration getConditionEnumeration( ) | Returns an enumeration of the conditions which compose the rule |
| void release( ) | Release resources acquired by the rule, specifically by its action object |
| EF excecuteAction(EventCollection aEventCollection) | Execute the action |

Many types of EFs can be implemented. Architecturally, an EF base class **1810** that includes attributes common to EFs is used. The common attributes may vary depending on the situation, although typical attributes such as a creation date timestamp and a session identifier for the creating session are preferably included. A set of derived EF classes **1820** which include the particular attributes and methods unique to the various EFs desired by a system operator inherent from the EF base class **1810.**

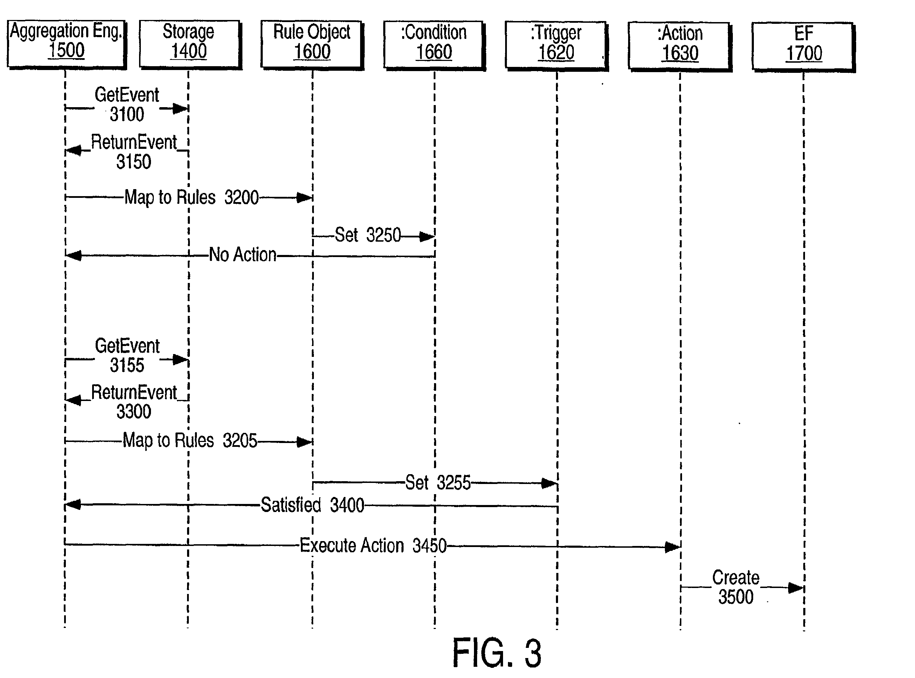

**Fig. 3** depicts a flow diagram of an operational scenario for efficient generation of EF from SLSE in accordance with an illustrative embodiment. Process flow initiates when the aggregation engine **1500** invokes the getEvent method **4100** on one of the set of storage objects **1400** and receives a SLSE **4150** in return. The aggregation engine **1500** maps **4200** the SLSE to the rule objects for which the SLSE **4150** is a condition. In some embodiments, SLSEs have an associated identifier and an efficient data structure, e.g., a hash table, is used for the mapping where the associated identifier maps to rules for which the SLSE occurs in the condition portion **1660.** The aggregation engine **1500** sets **4250** the SLSE **4150** and tests whether the trigger event is satisfied so that the rule object **1600** should to execute the action **1630.**

Assuming for illustration, the trigger event is not satisfied, process flow returns to the aggregation engine **1500** that invokes the getEvent method for a new event **3155** that again returns an SLSE **4300** which is mapped **3205** to a rule object **1600.** Assuming, now, that the SLSE **4300** is a triggering event, the aggregation engine **1500** sets **3255** the trigger condition **1620.** The trigger condition **1620** being satisfied **3400,** the aggregation engine **1500** invokes the executeAction method **3450** of the action object **1630** in the rule object **1600.** The action object **1630** then executes the create method **3500** for the EF **1700** which is passed to the second message broker **1800** for further distribution.

Distribution through the message broker **1880** provides additional benefits in connection with features of the invention. For instance, in an optimized system for transforming SLSEs to EFs where EFs may be used by several entities, distribution through the message broker **1880** allows for a system operator to reduce storage requirements by simply publishing the EFs via the message broker **1880.**

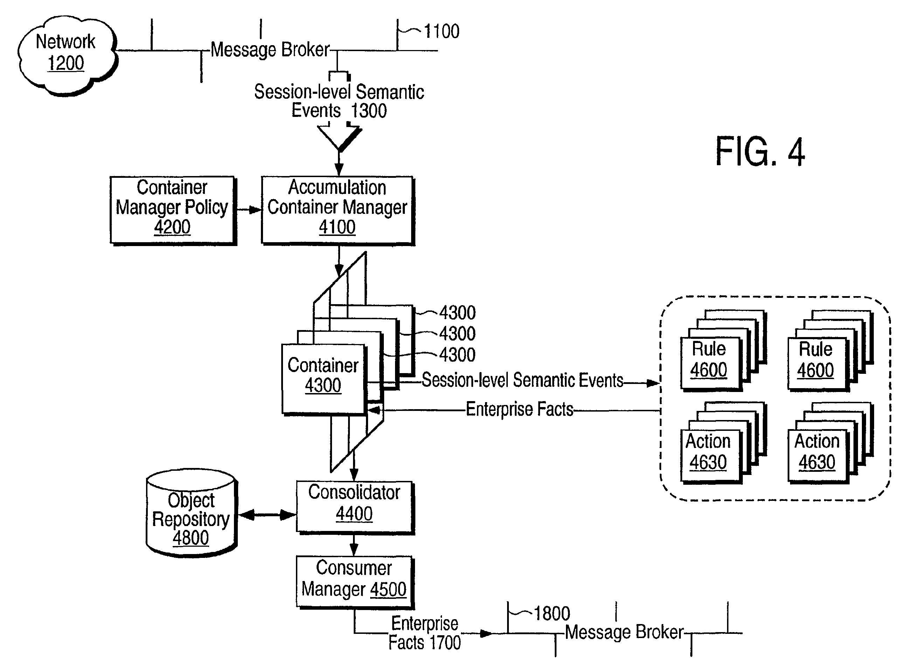

**Fig. 4** depicts a block diagram of an operating architecture for efficient generation of enterprise facts ("EF"s) from browsing session event data in accordance with an embodiment distinct from that described in connection with **Fig. 1.** Certain features are common, as will be appreciated by one skilled in the field from this disclosure. As previously described in connection with **Fig. 1**, SLSE **1300** arrive from the first message broker **1100.** In this embodiment, an accumulation container manager **4100** receives the SLSE **1300.** The accumulation container manager **4100** regulates the SLSE into accumulation containers **4300** with a container manager policy **4200.** The container manager policy **4200** provides a policy for dispatching SLSE **1300** into containers **4300.** No policy is fundamental and the policy should be selected based on the requirements of the situation. Illustrative policies include, for instance, based on a session of a user, based on the user, based on a product or service, based on a business agreement, based on other quantities, or based on the types the SLSE **1300.** In an illustrative embodiment, the container manager policy **4200** includes an interface method that returns the association between the containers **4300** and a particular on of the SLSE **1300,** an interface method for shutdown and restart as described below, as well as a destructor method and a method for deleting container-identifying keys.

An accumulation process accessing the container **4300** performs the function of aggregating the SLSE **1300.** In accordance with the embodiment in **Fig. 4,** the container **4300** simply has access to the rules object **4600** and the action object **4630.** For each container **4300,** as the SLSE **1300** filter in, the accumulation process identifies each of the SLSE **1300** by type. Based on the type, the aggregation process then determines the particular ones of the rule objects **4600** and the action objects **4630** that should receive each of the SLSE **1300.** It should be made clear that each one of the SLSE **1300** could be mapped to more than one of the rules objects **4600** and the action objects **4630** if appropriate based on the type.

The rule object **4600** performs whatever aggregation, accumulation, or operation that is desired based on the SLSE **1300.** More particularly, a predefined rule performs some function based on the data from the SLSE **1300.** What the particular function is will vary with the needs of the situation. This could be, for instance, a simple counter, e.g. counting number of page views in a user session, counting revenue accumulated by a merchant during a user's shopping session. This could also be more complex formulation, for instance, based on a number of conditions or cases. For ease of exposition, the term "Accumulation" is used hereafter to refer to functions performed by the rule objects **4600.** Conveniently, when plural rule objects **4600** need to perform the same Accumulation, this Accumulation could be factored out into an intermediary rule object **4600** that the others could reference.

Analogously, the action object **4630** performs the action is based on the SLSE **1300.** The Accumulation process determines the type of each of the SLSE **1300** which is used to identify one (or more) of the action objects **4630.** The action objects **4630** receive the SLSE **1300** that is a triggering conditions for executing whatever action the particular action object **4630** performs. This action includes the production of an EF; in some instances it could be the production of an intermediary result.

In accordance with this embodiment the accumulation process accesses the containers **4300** and for the SLSE **1300** tests whether each SLSE **1300** is a "parameter" for the rule objects **4600―**that is whether the rule object **4600** performs an Accumulation based on SLSE **1300** of that type. In addition, the accumulation process tests whether each SLSE **1300** is a "condition" for one of the action objects **4630.** That is, the rule objects **4600** identify when one of the SLSE **1300** should trigger an action and the particular action object **4630** for execution.

When the action objects **4630** generate EFs, the EFs pass to a consolidator **4400**. The consolidator **4400** allows for sychronization of the flow of EFs with a persistent storage. In some embodiments, an object repository **4800** provides a persistent object storage for objects which are relevant to the enterprise. For instance, so-called "business objects" are an example of such a set of objects relevant to an enterprise and the object repository **4800** could be a storage for such business objects. The particular storage architecture is not fundamental. In some embodiments, a relational database management system is used. With an XML-based object representation used elsewhere, an object-relationship mapping could be used to provide an abstraction layer between the XML and relational models. A dedicated object manager could also be used, as could other storage models available to one skilled in the field. The consolidator **4400** interoperates with the object repository **4800** so that downstream users of the EFs are able to obtain consistent, sychronized, information whether though access of the object repository **4800** or from the EFs. In some embodiments, an interpretation of the production of EFs is as a state change for business objects stored in the object repository **4800.**

When an EF is generated, the consolidator **4400** receives the EF and takes any action necessary to retain consistency with the object repository **4800.** The consolidator **4400** generally provides a transactional-based access to external resources in connection with producing EFs and maintaining consistency with the object repository **4800**. For instance, the consolidator **4400** could retrieve or updating additional information in connection with producing EFs. The consolidator **4400** provides the EF to a consumer manager **4500** for further distribution via the second message broker **1800.** One feature the consolidator **4400** can implement is simultaneous commit of both the distribution to the consumer manager **4500** and the consistency maintenance against the object repository **4800.**

The consumer manager **4500** controls distribution of EFs to recipients of the EFs via the second message broker **1800.** Reliable transmission protocols could be used, and the consumer manager **4500** could ensure reliable distribution of the EFs to clients receiving from the second message broker **1800.**

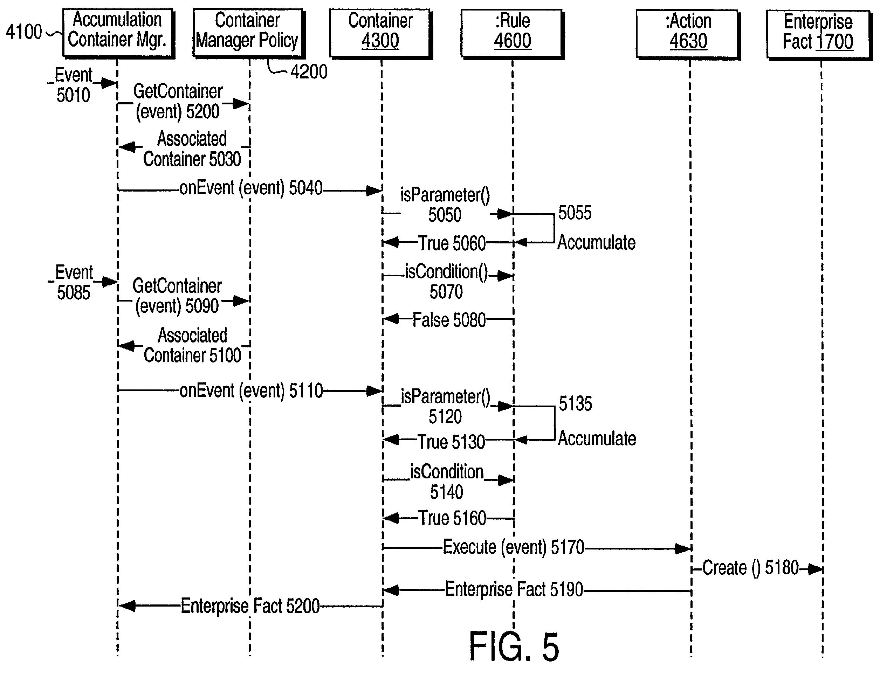

**Fig. 5** depicts a flow diagram of an illustrative operational scenario for efficient generation of EF from SLSE in accordance with embodiments illustrated by **Fig. 4.** Upon arrival of a first event **5010,** the accumulation container manager **4100** invokes a getContainer method **5200** in the container policy manger **4200** for determining to which container **4300** the first event **5010** should be dispatched and the container policy manager **4200** returns **5030** the appropriate container. No particular manner of identifying the container is fundamental, for instance a key could be passed for use with a look-up data structure, object reference, or other means. If a container needs to be created, for instance if the first event **5010** indicated the initiation of a session and containers were session based, then the accumulation container manager **4100** would create a new container.

The accumulation container manager **4100** invokes a method **5040** in the container **4300** with the first event **5010** and the accumulation process tests **5050** the rule object **4600** based on the type of the first event **5010.** If the first event **5010** is of the type the rule object **4600** accumulates, the rule object **4600** returns **5060** this indication. The rule object **4600** also accumulates **5055** one or more quantities it tracks based on the first event **5010.** The accumulation process also tests **5070** whether the first event **5010** is a condition for one of the action objects **4630.** In this illustrative scenario, a false is returned **5080.**

In this illustrative scenario, when a second event **5085** arrives, the accumulation container manager **4100** again consults **5090** the container manager policy **4200** which returns **5100** the proper container **4300** for the second event **5085.**

The accumulation container manager **4100** invokes a method **5110** in the container **4300** with the second event **5085** and the accumulation process tests **5120** the rule object **4600** based on the type of the second event **5085.** If the second event **5085** is of the type the rule object **4600** accumulates, the rule object **4600** returns **5130** this indication. The rule object **4600** accumulates **5135** one or more quantities it tracks based on the second event **5085.** Now, illustratively, the second event **5085** is also identified by the accumulation process as associated with the action object **4630;** this is tested **5140** and the action object **4630** returns **5160** returns this indication. An execute method is invoked **5170** in the action object **4630** to create **5180** the enterprise fact **1700.** As has been previously described, the enterprise fact **1700** can be based on quantities accumulated in one or more rule objects **4600.** The enterprise fact **1700** is passed back **5190** to the container **4300** and then passed **5200** for further processing, for instance by the consolidator **4400**.

While it should be apparent to one skilled in the field, it is noted that the first event **5010** and the second event **5085** discussed above in connection with **Fig. 5,** are examples of the SLSE **1300.**

Additional features are noted in connection with the aforementioned illustrative embodiments. First, stop and restart functionality could be implemented in connection with the system and method for transforming session data described herein. In such an instance the state of the containers **4300** and/or the storage object **1400** should be saved at stop time (as well as any of the SLSE 1300 being currently processed) and the state resumed at restart time. Second, it may be desirable to further implement "failover" functionality so that state can be resumed in case of inadvertent stopping of processing, e.g., system crash, power failure, etc. One skilled in the art having the benefit of this disclosure will appreciate how known techniques could be applied in this regard.

Although the present invention has been described in terms of features illustrative embodiments, one skilled in the art will understand that various modifications and alterations may be made without departing from the scope of the invention. Accordingly, the scope of the invention is not to be limited to the particular embodiments discussed herein, but should be defined only by the allowed claims and equivalents thereof.

## Claims

1. A computer-controlled method of generating enterprise facts from session-level semantic events comprising:
generating session-level events responsive to data flow of a browsing session of a user;
receiving and accumulating said session-level semantic events in a storage object;
determining if one of said session-level semantic events is a triggering condition of one or more rules for generating high-level semantic; and
returning a enterprise fact for those of said one or more rules for which said triggering condition is satisfied.

2. The computer-controlled method according to claim 1 wherein said storage object is associated with said browsing session.

3. The computer-controlled method according to claim 1 wherein said storage object is associated with said user.

4. The computer-controlled method according to any preceding claim where generating session-level events also includes storing said session-level events in a shared memory area.

5. The computer-controlled method according to any preceding claim wherein returning a high level semantic event includes broadcasting across a message broker.

6. The computer-controlled method according to any preceding claim wherein said one or more rules comprise:
a condition portion, said condition portion comprising a first event portion and a second event portion, said first event portion associated with a triggering event, said second event portion associated with other events.

7. The computer-controlled method according to any preceding claim wherein said session-level events are a data object including a set of predetermined attributes and a set of pair-value attributes.

8. The computer-controlled method according to any preceding claim wherein said one or more rules comprise:
a first action part, said action part comprising, a default action indicating a first type of enterprise fact to return, and a second action part indicating a function to be performed on second type of enterprise fact.

9. The computer-controlled method according to claim 8 wherein said second action part comprises:
a function type;
a enterprise fact type to be affected; and
a field of said enterprise fact to be affected.

10. The computer-controlled method according to any preceding claim where there is a many to one mapping between said generated session-level semantic events and said returned enterprise facts.

11. A computer-implemented system for generating enterprise facts from low-level semantic events comprising:
a storage object, said storage object having a method for storing a low-level semantic event, and a method for testing if said low-level semantic event is stored;
a enterprise fact generation object comprising a method for invoking said method testing if said low-level semantic event is stored in said storage object for determining if a condition of a predetermined rule is satisfied;
a rule object comprising a set of conditions including a trigger condition for activating a rule; and
an action object for execution upon activation of said rule.

12. The system according to claim 11 wherein:
wherein said enterprise fact generation object comprises a data structure for storing a value associated with a key, and wherein said key is said trigger condition, and
said value is said rule.

13. The system according to claim 11 or claim 12 further comprising a first message broker, said message broker configured for receiving enterprise facts from said high enterprise fact object.

14. The system according to any of claims 11 to 13 wherein said one or more rules comprise:
a plurality of triggering conditions;
an first action part, said action part comprising, a default action indicting a first type of enterprise fact to return, and a second action part indicating a function to be performed on second type of enterprise fact.

15. The system according to any of claims 11 to 14 wherein said one or more rules comprise:
a function type;
a enterprise fact type to be affected; and
a field of said enterprise fact to be affected.

16. The system according to claim 15 wherein said one or more rules comprise:
an first action part, said action part comprising, a default action indicting a first type of enterprise fact for returning, and a second action part indicating a function to be performed on second type of enterprise fact.

17. A computing apparatus comprising:
means for receiving session-level semantic event data, from a user's session;
means for accumulating said event data;
means for determining if one of said session-level semantic event datum is a triggering condition of one or more rules for generating enterprise fact; and
means for returning a enterprise fact for those of said one or more rules for which said triggering condition is satisfied.

18. A computer-implemented method for transforming user-session data into business event data, said method comprising:
receiving events created from a user session;
storing a plurality of rules, said rules having a condition part and an action part, said condition part being satisfied responsive to selected ones of said events from said user session, said action part for creating business event data;
matching said events created from a user session with ones of said rules for which said events contribute to satisfaction of the condition part;
generating business event data through executing the action part of said rules upon determining the condition part of said rules is satisfied; and
publishing said business event data on a message broker.

19. The method of any of claims 1 to 10 wherein said storage object is non-persistent.

20. The system of any of claims 11 to 16 wherein said storage object is non-persistent.
